# FASCICULE DE BREVET EUROPEEN

(11) **EP 1 126 968 B1**
(45) Date de publication et mention de la délivrance du brevet: **12.03.2003**
(21) Numéro de dépôt: 99955896.8
(22) Date de dépôt: 28.10.1999
(51) Int. Cl.: B29C 65/00, B60C 11/01

(54) **ARTICLE EN CAOUTCHOUC AVEC JONCTION DE DEUX MELANGES CAOUTCHOUTEUX**
GUMMIERZEUGNIS MIT EINER VERBINDUNGSZONE VON ZWEI KAUTSCHUKMISCHUNGEN
RUBBER ARTICLE WITH JUNCTION OF TWO RUBBER MIXTURE COMPOSITIONS

(30) Priorité: 02.11.1998 FR 9813777
(43) Date de publication de la demande: 29.08.2001
(73) Titulaire: Sociéte de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: MOREL, Noel, F-63530 Enval (FR)
(74) Mandataire: Diernaz, Christian
(86) Numéro de dépôt international: EP9908179
(87) Numéro de publication internationale: WO00026009

(56) Documents cités:
- US-A- 1 356 891
- US-A- 3 504 710
- US-A- 3 584 343
- US-A- 4 325 423
- US-A- 5 356 682
- PATENT ABSTRACTS OF JAPAN vol. 095, no. 011, 26 décembre 1995 (1995-12-26) & JP 07 205332 A (BRIDGESTONE CORP), 8 août 1995 (1995-08-08)

## Description

L'invention concerne un article en caoutchouc composé d'au moins deux mélanges vulcanisés de composition et propriétés différentes et qui présentent entre eux une jonction par recouvrement. Elle concerne plus particulièrement un pneumatique dans lequel les différents mélanges qui le constituent sont réunies par superposition d'un bord d'un des mélanges sur un autre mélange.

Les jonctions entre mélanges citées ci-dessus, lorsqu'elles sont soumises à des contraintes qu'elles soient de tension, de compression, ou de cisaillement, représentent pour l'article considéré une région particulièrement vulnérable, la durée de vie de l'article étant fortement limitée par la destruction de la jonction, que cette destruction soit due à un manque de collage, ou à une concentration de contraintes à l'emplacement de ladite jonction, ou encore à une agression extérieure pour certaines jonctions.

L'invention a pour but d'améliorer la durée de vie de l'article considéré en rendant la(les) jonctions entre mélanges caoutchouteux constituant ledit article moins influencées par les causes connues de sa(leur) destruction.

L'article en caoutchouc vulcanisé, conforme à l'invention, composé d'au moins deux mélanges caoutchouteux de composition et propriétés différentes, les dits deux mélanges présentant une jonction par recouvrement, est caractérisé en ce qu'au moins un des bords d'au moins un des deux mélanges possède une extrémité à tracé représentatif d'un mouvement oscillatoire, ou tracé oscillatoire.

L'épaisseur du bord du mélange concerné est préférentiellement constante sur une largeur au moins égale à l'amplitude désirée du tracé : ladite épaisseur est dans tous les cas inférieure à 2 mm à l'état non vulcanisé de manière à ce que le moulage et la vulcanisation de l'article fini efface les irrégularités de surface créées à la jonction des deux mélanges.

Tout tracé peut convenir (tracé d'oscillation stationnaire ou non stationnaire) les tracés préférentiels étant le tracé sinusoïdal d'une oscillation harmonique et le tracé circulaire (le tracé correspondant à une demi-période étant un demi-cercle).

L'application préférentielle du (des) bord(s) crénelé(s) ou dentelé(s) est relative à la jonction de deux mélanges caoutchouteux constituant un pneumatique, que cette jonction débouche sur une paroi externe de pneumatique ou que cette jonction soit totalement interne. L'application est particulièrement bénéfique pour la jonction sur le flanc du pneumatique entre le mélange de bande de roulement et le mélange de flanc.

Un tracé oscillatoire peut être caractérisé par une amplitude et une longueur d'ondes. L'amplitude mesurée crête à crête, variable ou non, est alors, dans le cas de l'application pneumatique, préférentiellement comprise entre 3 mm et 15 mm. Quant à la longueur d'ondes, elle est préférentiellement comprise entre 0,1 % et 2,0 % du développement circonférentiel du pneumatique mesuré dans le plan équatorial.

Les caractéristiques et avantages de l'invention seront mieux compris à l'aide de la description qui suit et qui se réfère au dessin, illustrant à titre non limitatif des exemples d'exécution et sur lequel :
* les figures 1A et 1B montrent schématiquement une première variante de jonction entre deux mélanges caoutchouteux respectivement vue en coupe et en plan,
* les figures 2A et 2B montrent respectivement en section transversale et en plan la jonction entre un mélange de bande de roulement et un mélange de flanc dans un pneumatique de tourisme,
* les figures 3A à 3C montrent une jonction interne entre le bord supérieur du profilé quasi-triangulaire au-dessus de la tringle d'un pneumatique et le mélange de calandrage de la nappe de carcasse dudit pneumatique.

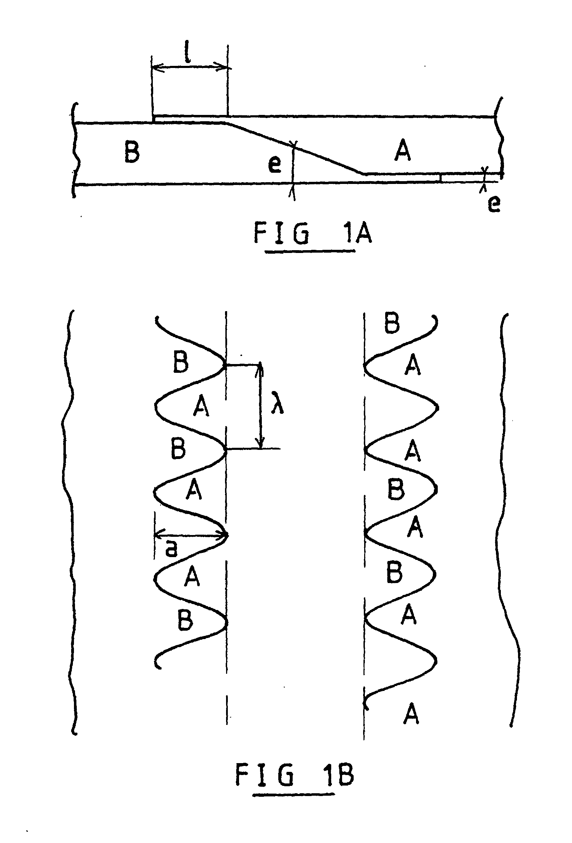

Une plaque de caoutchouc vulcanisé (fig. 1A), vue en coupe, est composée de deux mélanges caoutchouteux A et B, différents par leur composition et en conséquence par leur propriétés. Les dits deux mélanges, à l'état non vulcanisé, sont profilés par passage entre les rouleaux d'une calandre ou par passage dans une lame de boudineuse, et les bords de chaque profilé ont une épaisseur e, qui décroît régulièrement de l'épaisseur maximale jusqu'à une épaisseur au plus égale à 2 mm et dans le cas décrit une épaisseur égale à 0,6 mm, ladite épaisseur restant constante jusqu'aux extrémités du profilé. La jonction des deux mélanges se fait par l'intermédiaire des deux bords en pente et des languettes d'épaisseur constante et de largeur 1 égale à 7 mm. Les dites languettes présentent une forme ondulée (fig.1B), l'extrémité du bord de chaque mélange ayant un tracé sinusoïdal d'amplitude a crête à crête égal à 5 mm et de longueur d'ondes λ égale à 10 mm.

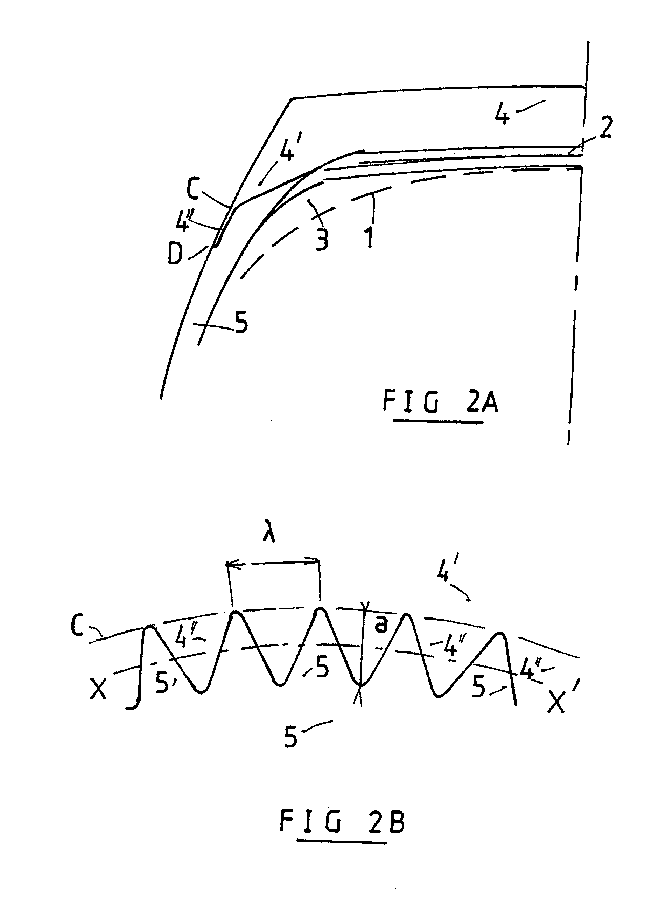

Les figures 2A et 2B concernent l'application préférentielle du principe décrit ci-dessus et montrent partiellement la partie supérieure d'une coupe transversale d'un pneumatique de dimension 175/70.R.13. Ledit pneumatique comprend une armature de carcasse radiale (1) surmontée radialement d'une armature de sommet (2) composée de deux nappes de câbles métalliques croisés d'une nappe à la suivante en faisant avec la direction circonférentielle un angle de 22°. Les bords dudit sommet (2) sont reliés à l'armature de carcasse (1) par des profilés (3). Une bande de roulement (4) recouvre radialement l'armature (2) et est reliée à une gomme de flanc (5). La jonction de la bande de roulement (4) et de la gomme de flanc (5) se réalise par le bord de ladite bande avec une partie (4') présentant une épaisseur décroissante jusqu'au point C et une partie (4") ou languette à épaisseur constante égale à 0,6 mm entre les points C et D sur la paroi externe du pneumatique. Ladite languette (4") est découpée selon la figure 2B : le tracé oscillatoire de l'extrémité est formée d'une succession de triangles à sommets arrondis de part et d'autre d'un axe moyen XX'. L'amplitude a est alors égale à 5 mm et la longueur d'ondes λ à 10 mm, ce qui représente 0,55 % du développement circonférentiel du pneumatique mesuré dans le plan équatorial ZZ'.

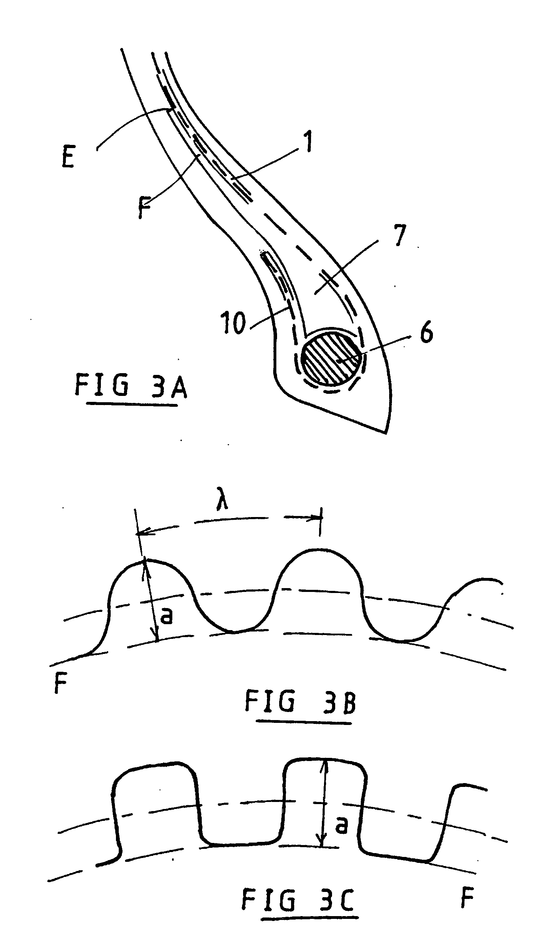

Le dernier exemple montré sur les figures 3A à 3C concerne une jonction interne au pneumatique, et plus particulièrement la jonction entre la pointe radialement supérieure du profilé (7) de mélange caoutchouteux situé radialement au-dessus de la tringle d'ancrage (6) de l'armature de carcasse (1) et d'une part la couche de mélange caoutchouteux recouvrant les câbles de l'armature de carcasse (1) (calandrage de la nappe) et d'autre part le mélange caoutchouteux situé axialement à l'extérieur de ladite pointe. Comme décrit précédemment, le profilé (7) possède un bord avec une partie d'épaisseur décroissante et une partie EF d'épaisseur constante égale dans ce cas à 0,5 mm, et de largeur égale à 5 mm. La partie EF a une extrémité suivant un tracé périodique dit demi-circulaire comme montré sur la figure 3B, avec une amplitude a de 3,0 mm et une longueur d'ondes λ de 6,0 mm. Ledit tracé peut être aussi périodique trapézoïdal comme montré sur la figure 3C, avec les mêmes valeurs d'amplitude et de longueur d'ondes, sans que la jonction entre les mélanges soit pénalisée.

Des essais comparatifs entre des pneumatiques présentant entre bande de roulement et gomme de flanc des jonctions à extrémités droites et des pneumatiques ayant entre les mêmes mélanges des jonctions à tracé périodique tel que décrit dans le passage de la description relatif à la jonction concernée, mettent en évidence la très nette supériorité de la solution conforme à l'invention, puisque les pneumatiques ainsi conçus ont réalisé des kilométrages, avant apparition d'une amorce de dégradation, deux fois plus élevés que ceux réalisés par des pneumatiques présentant entre la bande de roulement et la gomme de flanc une jonction à tracé rectiligne, aussi bien en roulage avec surcharge qu'en roulage sous ambiance ozonée. De même, les jonctions conformes à l'invention utilisées dans la partie basse d'un pneumatique entre le profilé au-dessus de la tringle et le calandrage d'armature de carcasse permet l'utilisation pour le profilé (7) de mélanges qui de par leur composition sont peu compatibles en collage avec les mélanges de calandrage usuellement utilisés.

## Revendications

1. Article en caoutchouc vulcanisé, composé d'au moins deux mélanges caoutchouteux A et B de composition et propriétés différentes, les dits deux mélanges A et B présentant une jonction J par recouvrement, **caractérisé en ce qu'**au moins un des bords d'au moins un des deux mélanges A, B possède une extrémité à tracé oscillatoire.

2. Pneumatique constitué de plusieurs mélanges caoutchouteux vulcanisés, **caractérisé en ce qu'**au moins une jonction par recouvrement entre deux mélanges est réalisée par le recouvrement de l'un des mélanges par le bord de l'autre mélange, ledit bord possédant une extrémité à tracé oscillatoire.

3. Pneumatique selon la revendication 2, **caractérisé en ce que** les deux mélanges concernés sont le mélange de bande de roulement (4) et le mélange de flanc (5) présentant une jonction débouchant sur la paroi externe du flanc.

4. Pneumatique selon la revendication 3, **caractérisé en ce que** chaque bord de la bande de roulement (4) présente une partie (4') à épaisseur décroissante prolongée par une partie (4") à épaisseur constante au plus égale à 2 mm et dont l'extrémité est à tracé périodique.

5. Pneumatique selon la revendication 4, **caractérisé en ce que** l'amplitude a du tracé est comprise entre 3 mm et 15 mm, la longueur d'ondes dudit tracé étant comprise entre 0,1 % et 2,0 % du développement circonférentiel dudit pneumatique mesuré dans le plan équatorial.

## Claims

1. Article made of vulcanised rubber, consisting of at least two rubber mixtures A and B with different composition and properties, the said two mixtures A and B having a lap joint J, **characterised in that** at least one edge of at least one of the two mixtures A, B has an end with an oscillatory trace-line.

2. Tyre consisting of several vulcanised rubber mixtures, **characterised in that** at least one lap joint between two mixtures is made by overlapping one of the mixtures over the edge of the other mixture, the said edge having an end with an oscillatory trace-line.

3. Tyre according to Claim 2, **characterised in that** the two mixtures concerned are the mixture for the tread (4) and the mixture for the sidewall (5), having a junction emerging on the outside of the sidewall.

4. Tyre according to Claim 3, **characterised in that** each edge of the tread (4) has a portion (4') with decreasing thickness extended by a portion (4") of constant thickness equal to at most 2 mm, whose end has a periodic trace-line.

5. Tyre according to Claim 4, **characterised in that** the amplitude a of the trace-line is between 3 mm and 15 mm, the wavelength of the said trace-line being between 0.1% and 2.0% of the circumferential extension of the said tyre measured in the equatorial plane.

## Patentansprüche

1. Erzeugnis aus vulkanisiertem Kautschuk, das aus mindestens zwei Kautschukmischungen A und B unterschiedlicher Zusammensetzung und Eigenschaften besteht, wobei die beiden Mischungen A und B eine Verbindungszone J durch Überdeckung aufweisen, **dadurch gekennzeichnet, daß** mindestens einer der Ränder mindestens einer der beiden Mischungen A, B ein Ende mit schwingendem Verlauf aufweist.

2. Aus mehreren Mischungen von vulkanisiertem Kautschuk bestehender Luftreifen, **dadurch gekennzeichnet, daß** mindestens eine Verbindungszone durch Überdeckung zwischen zwei Mischungen durch die Überdeckung einer der Mischungen durch den Rand der anderen Mischung hergestellt wird, wobei dieser Rand ein Ende mit schwingendem Verlauf aufweist.

3. Luftreifen nach Anspruch 2, **dadurch gekennzeichnet, daß** die beiden betroffenen Mischungen die Mischung der Laumäche (4) und die Mischung der Seitenwand (5) sind, die eine Verbindungszone aufweisen, die auf der Außenwand der Seitenwand münden.

4. Luftreifen nach Anspruch 3, **dadurch gekennzeichnet, daß** jeder Rand der Lauffläche (4) einen Bereich (4') mit abnehmender Stärke aufweist, der von einem Bereich (4") konstanter Stärke von höchstens gleich 2 mm verlängert wird, dessen Ende einen periodischen Verlauf aufweist.

5. Luftreifen nach Anspruch 4, **dadurch gekennzeichnet, daß** die Amplitude a des Verlaufs zwischen 3 mm und 15 mm liegt, während die Wellenlänge des Verlaufs zwischen 0,1 % und 2,0 % der Umfangsabwicklung des Luftreifens, gemessen in der Äquatorialebene, liegt.
